# FASCICULE DE BREVET EUROPEEN

(11) **EP 1 779 284 B1**
(45) Date de publication et mention de la délivrance du brevet: **19.03.2014**
(21) Numéro de dépôt: 05798504.6
(22) Date de dépôt: 12.08.2005
(51) Int. Cl.: G06F 21/60, G06F 21/55

(54) **PROCÉDÉ ET DISPOSITIF DE TRAITEMENT DE DONNÉES**
DATENVERARBEITUNGSVERFAHREN UND VORRICHTUNG
DATA PROCESSING METHOD AND DEVICE

(30) Priorité: 17.08.2004 FR 0408928
(43) Date de publication de la demande: 02.05.2007
(60) Demande divisionnaire: 10177462.8
(73) Titulaire: OBERTHUR TECHNOLOGIES, 92700 Colombes (FR)
(72) Inventeur: CHAMBEROT, Francis, F-92170 Vanves (FR)
(74) Mandataire: Bonnans, Arnaud
(86) Numéro de dépôt international: PCT/FR2005/002083
(87) Numéro de publication internationale: WO 2006/021686

(56) Documents cités:
- US-A- 5 274 817
- US-A1- 2003 028 794
- US-A1- 2003 101 351

## Description

La présente invention concerne un procédé de traitement de données, mis en oeuvre par exemple dans une carte à microcircuit.

Dans certains contextes, on cherche à sécuriser le fonctionnement des appareils de traitement de données. C'est notamment le cas dans le domaine de la monétique, où une entité électronique (par exemple carte à microcircuit) est porteuse d'une information représentant une valeur pécuniaire et qui ne peut donc être modifiée que selon un protocole déterminé. Il peut également s'agir d'une entité électronique permettant l'identification de son porteur, auquel cas le fonctionnement doit être sécurisé pour éviter toute falsification ou usage abusif.

Une telle entité électronique est par exemple une carte bancaire, une carte SIM pour la téléphonie (l'acronyme SIM provenant de l'anglais *Subscriber Identity Module*), un passeport électronique, un module sécurisé du type HSM (de l'anglais *Hardware Security Module*) telle qu'une carte PCMCIA du type IBM4758, sans que ces exemples ne soient limitatifs.

Afin d'améliorer la sécurité du fonctionnement, on cherche à se prémunir contre les divers types d'attaques envisageables. Une catégorie importante d'attaques à contrecarrer est constituée par les attaques dites par génération de fautes, au cours desquelles des personnes mal intentionnées cherchent à faire sortir l'appareil de traitement de données de son fonctionnement normal, et donc sécurisé.

Pour parer ce genre d'attaques, les procédés de traitement de données couramment utilisés prévoient des étapes de vérification du déroulement normal du procédé, dans le but de détecter des anomalies dont une origine possible est une attaque par génération de fautes. Lorsqu'une anomalie est détectée (c'est-à-dire que le déroulement normal n'est pas vérifié), on procède immédiatement au traitement de l'anomalie, en général dénommé traitement sécuritaire. Ce type de traitement consiste en effet en une contre-mesure destinée à contrecarrer l'attaque, par exemple en interdisant tout fonctionnement ultérieur de l'appareil de traitement de données.

Comme indiqué, on conçoit habituellement le traitement de l'anomalie comme immédiat après détection, car le fait de poursuivre le traitement en présence d'une anomalie comporte à première vue le risque de dégrader encore le fonctionnement de l'appareil de traitement de données, et donc sa sécurité.

L'inventeur a toutefois remarqué que cette conception courante donne à l'attaquant une information sur le moment où a lieu la détection de l'anomalie. En effet, l'instant de détection de l'anomalie est en lui-même difficilement accessible de l'extérieur. Toutefois, on pense que l'attaquant peut avoir accès, par une observation et une analyse de la consommation électrique (ou du rayonnement électromagnétique) de l'appareil, à l'instant de mise en oeuvre du traitement de l'anomalie, par exemple dans le cas où ce traitement consiste en une action sur un dispositif externe. Puisque ce traitement suit immédiatement la détection de l'anomalie dans la conception courante, l'attaquant en déduirait relativement facilement l'instant de détection de l'anomalie.

Ainsi, à cause de la proximité de la détection de l'anomalie et du traitement de celle-ci dans les systèmes usuels, l'attaquant a accès à une information supplémentaire sur le fonctionnement de l'appareil de traitement de données, ce qui est bien sûr préjudiciable à la sécurisation du procédé.

Le document US 2003/0028794 A1 divulgue un procédé de sécurisation d'un dispositif informatique dans lequel des données d'empreintes digitales sont comparées et, en fonction du résultat de cette comparaison, une variable de contrôle est mise à jour afin de la comparer à un seuil.

L'invention propose un procédé selon la revendication 1.

Un attaquant qui cherche à comprendre le fonctionnement du procédé aura ainsi des difficultés à discerner le fonctionnement normal (cas de vérification positive) du fonctionnement en cas d'anomalie (i.e. de vérification négative).

La seconde action est par exemple différente de la première action. Ainsi la seconde action peut comprendre moins de risques, voire aucun risque, pour la sécurité du système.

Lorsqu'une troisième action est réalisée en cas de vérification positive, l'étape de traitement peut comprendre la réalisation d'au moins une quatrième action ayant au moins une seconde caractéristique commune avec la troisième action.

Un attaquant ne pourra donc pas distinguer les modes de fonctionnement. Ainsi, il ne pourra pas éviter le traitement de l'anomalie.

Quand le procédé est mis en oeuvre dans un appareil électronique, les première et deuxième actions peuvent avoir une première ou une seconde caractéristique commune qui est par exemple la consommation électrique ou le rayonnement électromagnétique de l'appareil généré(e) par la première, respectivement la troisième, action et par la seconde, respectivement la quatrième, action. Ainsi, un attaquant ne pourra pas distinguer le mode de fonctionnement normal du mode de fonctionnement anormal par l'observation du comportement électrique et/ou électromagnétique de l'appareil électronique.

La première ou seconde caractéristique commune peut être également le nombre d'instructions mis en oeuvre dans la première, respectivement la troisième, action et dans la seconde, respectivement la quatrième, action, ce qui rend impossible la distinction des modes de fonctionnement par la durée desdites actions.

La première ou seconde caractéristique commune peut être en outre le type d'instruction mis en oeuvre par la première, respectivement la troisième, action et par la seconde, respectivement la quatrième, action, ce qui assure une grande similarité dans la signature électrique et/ou électromagnétique desdites actions.

La première ou seconde caractéristique commune peut aussi être le type de données traitées par la première, respectivement la troisième, action et par la seconde, respectivement la quatrième, action, ce qui assure également une telle similarité.

Lorsque la première, respectivement la troisième, action comprend un accès à une première zone d'une mémoire, la seconde, respectivement la quatrième, action peut comprendre un accès à une seconde zone de ladite mémoire différente de la première zone. Le traitement des données parait donc semblable dans les deux modes de fonctionnement susmentionnés alors qu'il s'effectue en fait dans des contextes différents.

Selon une autre possibilité, la première ou seconde caractéristique commune est la communication avec un dispositif externe, qui peut être par exemple un cryptoprocesseur, une mémoire (e.g. une mémoire réinscriptible à semi-conducteur), ou un terminal d'utilisateur. La communication avec de tels dispositifs extérieurs est en effet observée par les attaquants et cette caractéristique commune est donc particulièrement susceptible de les induire en erreur.

La première action peut comporter une étape sécurisée, par exemple un algorithme cryptographique, qui est ainsi protégée contre les attaques par génération de faute.

Par exemple, les données de blocage sont écrites dans une mémoire physique.

Selon une possibilité particulièrement intéressante, l'écriture de données de blocage peut avoir lieu selon une chronologie identique à une écriture de données dans la mémoire physique en cas de déroulement normal du procédé.

Selon un mode de mise en oeuvre, ces données représentent une valeur pécuniaire. Ainsi, un attaquant ne pourra pas discerner a *priori* un blocage de l'appareil d'une opération sur la valeur qu'il représente.

Le critère est négatif par exemple si une signature erronée est fournie ou si une anomalie est détectée.

Le critère peut aussi être négatif si une attaque est détectée. Comme on l'a vu, l'invention est notamment intéressante dans ce contexte.

Le critère peut également être négatif si une erreur fonctionnelle est détectée. Un tel traitement en cas d'erreur fonctionnelle est inhabituel mais se révèle intéressant pour améliorer la sécurité du système, notamment parce que de telles erreurs fonctionnelles sont très rares en dehors des situations d'attaque et traduisent ainsi la présence probable d'une attaque.

Selon une caractéristique possible, l'étape de traitement et l'étape de vérification sont séparées par une étape intermédiaire comprenant au moins une instruction déterminée lors de l'exécution du procédé, par exemple de façon aléatoire. La compréhension du fonctionnement du système par l'attaquant s'en trouve encore compliquée.

Selon un mode possible de réalisation, une carte à microcircuit comprend un microprocesseur et le procédé est mis en oeuvre par le microprocesseur.

L'invention propose également un dispositif selon la revendication 25.

Ce dispositif est par exemple une carte à microcircuit.

D'autres caractéristiques et avantages de la présente invention apparaîtront mieux à la lecture de la description qui suit, faite en référence aux dessins annexés, dans lesquels :
- la figure 1 représente schématiquement les éléments principaux d'une forme de réalisation possible pour une carte à microcircuit ;
- la figure 2 représente l'allure physique générale de la carte à microcircuit de la figure 1 ;
- la figure 3 représente un procédé réalisé conformément à un premier mode de mise en oeuvre de l'invention ;
- la figure 4 représente un procédé réalisé conformément à un second mode de mise en oeuvre de l'invention
- la figure 5 représente un procédé réalisé conformément à un troisième mode de mise en oeuvre de l'invention.

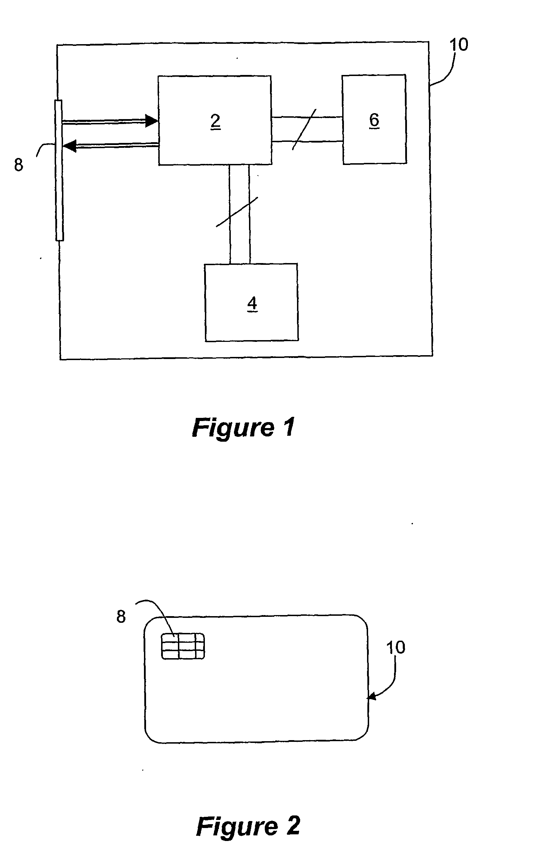

La carte à microcircuit 10 dont les éléments principaux sont représentés figure 1 comporte un microprocesseur 2 relié d'une part à une mémoire vive (ou RAM de l'anglais *Random Access Memory*) 4 et d'autre part à une mémoire à semi-conducteur réinscriptible 6, par exemple une mémoire morte effaçable et programmable électriquement (ou EEPROM de l'anglais *Electrically Erasable Programable Read Only Memory).* En variante, la mémoire réinscriptible à semi-conducteur 6 pourrait être une mémoire flash.

Les mémoires 4, 6 sont reliées au microprocesseur 2 par un bus chacune sur la figure 1 ; en variante, il pourrait s'agir d'un bus commun.

La carte à microcircuit 10 comporte également une interface 8 de communication avec un terminal utilisateur réalisée ici sous forme de contacts dont un assure par exemple une liaison bidirectionnelle avec le microprocesseur 2. L'interface 8 permet ainsi l'établissement d'une communication bidirectionnelle entre le microprocesseur 2 et le terminal utilisateur dans lequel la carte à microcircuit 10 sera insérée.

Ainsi, lors de l'insertion de la carte à microcircuit 10 dans un terminal utilisateur, le microprocesseur 2 va mettre en oeuvre un procédé de fonctionnement de la carte à microcircuit 10, selon un jeu d'instructions, stockées par exemple dans une mémoire morte (ou ROM de l'anglais *Read-Only Memory*) - non representée - ou dans la mémoire réinscriptible 6, qui définit un programme d'ordinateur. Ce procédé inclut en général l'échange de données avec le terminal utilisateur via l'interface 8 et le traitement de données au sein de la carte à microcircuit 10, et précisément au sein du microprocesseur 2 avec utilisation éventuelle de données stockées dans la mémoire réinscriptible 6 et de données stockées temporairement dans la mémoire vive 4.

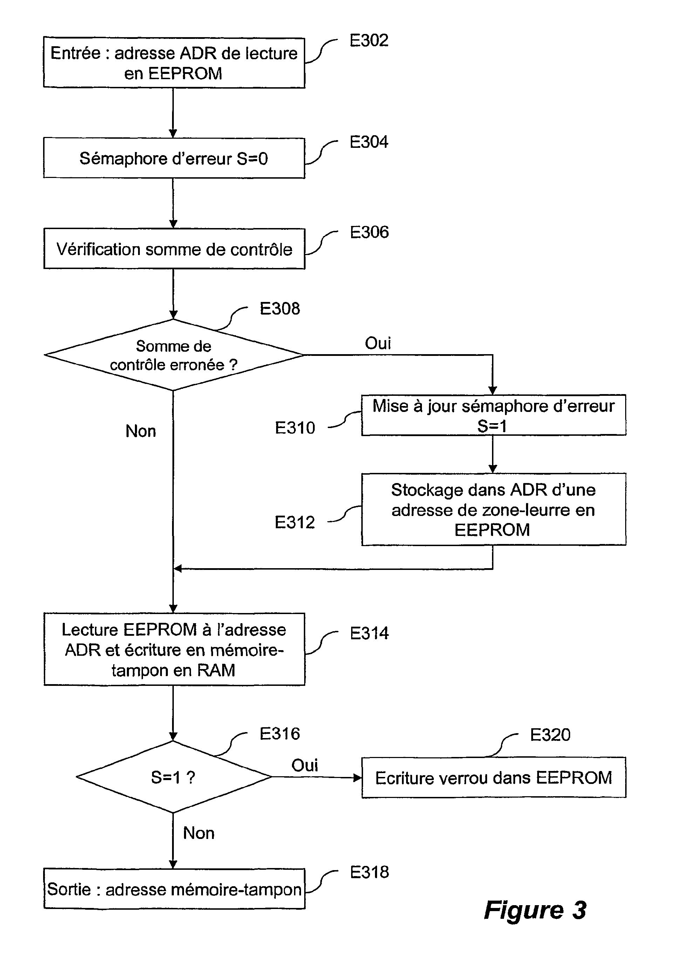

Des exemples de tels procédés qui mettent en oeuvre l'invention sont donnés dans la suite en référence aux figures 3 à 5.

La figure 2 représente l'allure physique générale de la carte à microcircuit 10 réalisée avec la forme générale d'un parallélépipède rectangle de très faible épaisseur.

L'interface de communication 8 pourvue des contacts déjà mentionnés apparaît clairement sur la face de la carte à microcircuit 10 visible sur la figure 2, sous forme d'un rectangle inscrit dans la face supérieure de la carte à microcircuit 10.

La figure 3 représente un procédé de lecture dans la mémoire réinscriptible 6 tel qu'il peut être mis en oeuvre par la carte à microcircuit 10 présentée à la figure 1, par exemple grâce à l'exécution d'un programme d'ordinateur au sein du microprocesseur 2. Ce procédé est donné comme un premier exemple de mise en oeuvre de l'invention.

Un tel procédé est utilisé par exemple lorsque des données inscrites dans la mémoire réinscriptible (ou EEPROM) 6 doivent être utilisées par le microprocesseur 2 lors d'une opération de traitement de données ; les données inscrites en mémoire réinscriptible 6 sont au préalable lues afin d'être transférées dans la mémoire vive 4 où elles pourront être facilement manipulées.

Comme cela est représenté à l'étape E302 de la figure 3, le procédé reçoit en entrée l'adresse ADR à laquelle il doit effectuer la lecture dans la mémoire réinscriptible (ou EEPROM) 6.

A l'étape E304, le procédé initialise à la valeur 0 un drapeau d'erreur S.

Les variables étant correctement initialisées, on passe alors à des étapes de vérification dédiées à assurer un fonctionnement sûr du système comme cela est requis en général dans les contextes sécurisés d'utilisation des cartes à microcircuit.

Ainsi, on procède à l'étape E306 à la vérification d'une somme de contrôle. Naturellement, d'autres vérifications sont possibles mais n'ont pas été représentées sur la figure 3 pour la clarté de l'exposé de l'invention.

L'étape E306 de vérification d'une somme de contrôle consiste à vérifier que les données inscrites en mémoire réinscriptible 6 sont bien cohérentes avec la somme de contrôle (parfois dénommée selon la terminologie anglosaxonne "*checksum*") associée à ces données.

On a alors une alternative à l'étape E308 : si la somme de contrôle n'est pas erronée, c'est-à-dire que la vérification de la somme de contrôle est positive, on poursuit le fonctionnement normal à l'étape E314 décrite plus bas ; si au contraire on détecte une erreur dans la somme de contrôle, c'est-à-dire que l'étape de vérification de la somme de contrôle donne un résultat négatif, on procède à l'étape E310.

On peut remarquer que la présence d'une somme de contrôle erronée, si elle indique en tout cas un déroulement anormal du fonctionnement de la carte à microcircuit, peut avoir des origines diverses : il peut s'agir d'une erreur fonctionnelle (par exemple une erreur dans le contenu de la mémoire réinscriptible 6), mais il peut s'agir également de la trace d'une attaque par génération de faute.

A l'étape E310, on met à jour le drapeau d'erreur S à la valeur 1 pour indiquer qu'une anomalie a été détectée.

On procède alors à l'étape E312 à laquelle on remplace l'adresse de lecture ADR reçue en entrée du procédé (voir l'étape E302 décrite plus haut) par l'adresse d'une "zone-leurre" située dans la mémoire réinscriptible 6. La zone-leurre est une zone mémoire a *priori* différente de l'adresse reçue à l'étape E302 ; il s'agit par exemple d'une adresse où aucune lecture ne doit normalement être effectuée en fonctionnement normal (c'est-à-dire lors du déroulement normal et sans anomalie du procédé de fonctionnement de la carte à microcircuit).

A titre d'exemple, ces zones-leurres peuvent comporter des données déterminées de façon aléatoire et/ou des données de même structure que les données qu'il était initialement prévu de lire à l'adresse ADR reçue à l'étape E302.

On remarque que l'étape E312 qui vient d'être décrite ne constitue pas une étape de traitement de l'anomalie détectée à l'étape E308 : par exemple, il ne s'agit ni de la transmission d'un code relatif à l'anomalie détectée, ni de l'affichage d'un message relatif à cette anomalie, ni d'une contre-mesure pour le cas où on considère que l'anomalie provient d'une attaque par génération de faute.

Après l'étape E312 (réalisée comme l'étape E310 seulement en cas de déroulement anormal du fonctionnement de la carte à microcircuit, c'est-à-dire en cas de vérification négative du fonctionnement normal à l'étape E306), on procède à l'étape E314 qui, comme indiqué plus haut, fait partie du déroulement normal du fonctionnement de la carte à microcircuit (en cas de vérification positive de la somme de contrôle comme indiqué à propos de l'étape E308).

L'étape E314 consiste à transférer les données de la mémoire réinscriptible 6 vers la mémoire vive 4 et constitue donc à cet égard le coeur du procédé de la figure 3, après les étapes d'initialisation et de vérification.

Précisément, l'étape E314 effectue une lecture dans la mémoire réinscriptible 6 à l'adresse spécifiée par la variable ADR précédemment mentionnée et une écriture des données lues en mémoire vive 4 dans une zone couramment désignée mémoire tampon qui sert en général à la manipulation des données.

On peut remarquer que, dans le cas où la somme de contrôle a été vérifiée positivement aux étapes précédentes, la variable ADR pointe effectivement sur l'adresse en mémoire réinscriptible 6 reçue en entrée, c'est-à-dire sur les données qui doivent effectivement être lues. Au contraire, lorsqu'une somme de contrôle erronée a été détectée (c'est-à-dire que la vérification a été négative aux étapes précédentes), la variable ADR pointe sur la zone-leurre définie à l'étape E312 de telle sorte que l'étape E314 réalisera en fait le transfert des données de la zone-leurre dans la zone de mémoire tampon en mémoire vive 4, et non la lecture requise par l'adresse reçue à l'étape E302.

Ainsi, dans le cas où une anomalie de fonctionnement est détectée par la vérification négative de l'étape E306, on n'effectue pas un accès en mémoire réinscriptible 6 à l'adresse prévue en fonctionnement normal, où sont en général stockées des données relativement sensibles sur la plan de la sécurité. On se prémunit ainsi contre la prise de connaissance de ces données sensibles par un attaquant, dans le cas où l'origine de l'anomalie détectée est une attaque par génération de faute.

En outre, l'étape E314 étant réalisée en fonctionnement normal comme après détection d'une anomalie de fonctionnement (bien qu'avec des données différentes), il est quasiment impossible pour un attaquant de détecter, par exemple par des mesures de courant, une sortie du fonctionnement normal.

Après l'étape E314, le procédé continue à l'étape E316 où l'on teste le drapeau d'erreur S.

Si le drapeau d'erreur S vaut 1, ce qui correspond au cas où il a été procédé à l'étape E310 (c'est-à-dire au cas d'une détection d'anomalie par vérification négative de la somme de contrôle à l'étape E306), on procède à l'étape E320 où l'on traite l'anomalie précédemment détectée, par exemple par l'écriture de données de blocage (ou verrou) dans la mémoire réinscriptible 6.

L'écriture d'un verrou dans la mémoire réinscriptible 6 consiste à écrire certaines données dans cette mémoire 6 qui empêcheront toute utilisation ultérieure de la carte à microcircuit 10. Par exemple, si la carte à microcircuit 10 est ultérieurement insérée dans un autre terminal utilisateur, le microprocesseur 2 de la carte à microcircuit 10 détectera la présence des données de blocage dans la mémoire réinscriptible 6 et ne procèdera à aucun traitement ni échange d'informations avec le terminal utilisateur.

L'écriture d'un verrou dans la mémoire réinscriptible 6 constitue une contre-mesure particulièrement efficace à une attaque par génération de faute. Ce type de traitement de l'anomalie détectée est donc particulièrement intéressant dans les cas où cette anomalie provient d'une attaque par génération de faute, ou dans les cas où la sécurité doit être d'un niveau tel que toute anomalie de fonctionnement doit impliquer le blocage de la carte à microcircuit.

La contre-mesure peut également consister à effacer des données confidentielles, par exemple des clés secrètes, de la mémoire réinscriptible 6.

En variante, l'étape de traitement de l'anomalie pourrait consister à mettre à jour un drapeau (mémorisé en mémoire vive 4 ou en mémoire réinscriptible 6) représentatif de l'anomalie détectée au cours du procédé de la figure 3. Cette solution permet de ne pas conduire immédiatement au blocage de la carte à microcircuit, mais de garder trace de la présence d'une anomalie de fonctionnement afin d'analyser le problème rencontré et éventuellement de procéder alors au blocage de la carte (par exemple si d'autres éléments viennent corroborer l'hypothèse d'une attaque par génération de faute).

Si l'étape E316 précédemment décrite indique que le drapeau d'erreur S ne vaut pas 1 (c'est-à-dire que la vérification de l'étape E306 a été positive), le procédé poursuit son fonctionnement normal à l'étape E318, à laquelle l'adresse de la zone de mémoire tampon en mémoire vive 4 précédemment mentionnée est émise en sortie afin de permettre l'utilisation des données lues dans la mémoire réinscriptible 6 dans la suite du fonctionnement de la carte à microcircuit.

Par exemple, si le procédé est une routine *Read Record* telle que définie par la norme ISO 7816, on émet dans les étapes ultérieures le contenu de la zone de mémoire tampon.

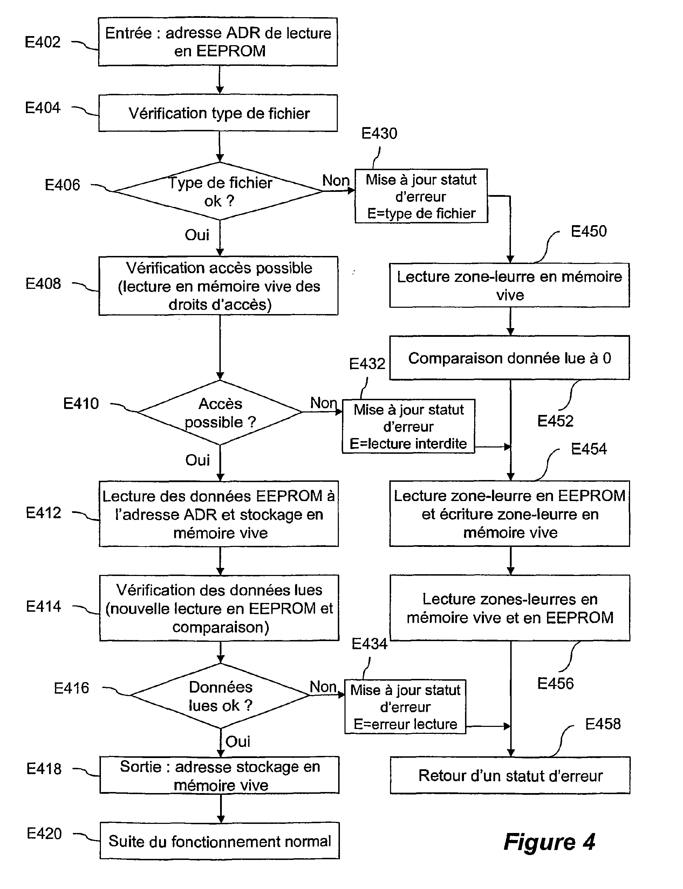

La figure 4 représente un procédé de lecture en mémoire réinscriptible 6 réalisé conformément à un second mode de réalisation de l'invention.

Ce procédé est par exemple mis en oeuvre par l'exécution des instructions d'un programme d'ordinateur par le microprocesseur 2.

Comme pour le procédé de la figure 3, le procédé décrit ici reçoit en entrée, à l'étape E402, l'adresse ADR à laquelle il doit lire des données dans la mémoire réinscriptible 6.

On procède alors à l'étape E404 à une vérification du type de fichier lu. L'étape E404 peut par exemple consister à lire dans la mémoire réinscriptible 6 l'en-tête du fichier désigné par l'adresse ADR et à vérifier que les données de cet en-tête correspondent bien à des données indicatives du type qui doit être lu par la mise en oeuvre du procédé décrit ici.

Si le type de fichier désigné par l'en-tête ne correspond pas au type de fichier qui doit être lu, on sort du déroulement normal du procédé à l'étape E406 pour passer à l'étape E430 décrite plus loin. Si au contraire le type de fichier est correct, l'étape E406 envoie à l'étape E408 du fonctionnement normal décrite à présent.

A l'étape E408, on vérifie que la lecture dans la mémoire réinscriptible 6 est autorisée par comparaison des droits d'accès nécessaires spécifiés dans l'en-tête du fichier à ceux présentés par l'utilisateur, ces informations étant accessibles en mémoire vive 4.

Si la lecture en mémoire réinscriptible 6 n'est pas autorisée selon les données lues en mémoire vive, la vérification de la possibilité d'accès à cette mémoire 6 est négative et on passe alors à l'étape E432 décrite plus loin.

Au contraire, si on détermine à l'étape E410 que l'accès à la mémoire réinscriptible 6 est autorisé, on passe à l'étape E412 pour la poursuite du déroulement normal du fonctionnement de la carte à microcircuit.

Les étapes E404 à E410 procèdent ainsi à des vérifications du fonctionnement normal de la carte à microcircuit. D'autres vérifications que celles données ici à titre d'exemples pourraient naturellement être réalisées.

L'étape E412 déjà mentionnée, à laquelle on procède si les différentes vérifications relatives au fonctionnement normal ont été positives, consiste à lire les données stockées à l'adresse ADR en la mémoire réinscriptible 6 afin de les stocker en mémoire vive 4 pour les utiliser ultérieurement lors d'un traitement de données effectué par le microprocesseur 2.

Cette étape provoque donc des accès en lecture répétés dans la mémoire réinscriptible 6 et des accès en écriture répétés dans la mémoire vive 4.

Une fois le transfert des données de la mémoire réinscriptible 6 à la mémoire vive 4 achevé (soit par la lecture d'un nombre fixe d'octets en mémoire réinscriptible 6, soit par la lecture du nombre précis d'octets à lire reçus par exemple en entrée à l'étape E402), on procède à une étape E414 de vérification de l'exactitude des données lues. Pour ce faire, on effectue par exemple une nouvelle lecture des données dans la mémoire réinscriptible 6 et une comparaison de ces données aux données correspondantes précédemment stockées dans la mémoire vive 4 à l'étape E412.

Si une erreur est détectée lors de la comparaison, l'étape E416 envoie à l'étape E434 décrite plus loin.

Si en revanche toutes les données ont été correctement lues (c'est-à-dire que la deuxième lecture dans la mémoire réinscriptible 6 génère des données identiques à celles lues au cours de l'étape E412), l'étape E416 conduit à la poursuite du fonctionnement normal par l'étape E418 décrite à présent.

L'étape E418 consiste à retourner en sortie l'adresse de stockage en mémoire vive des données lues dans la mémoire réinscriptible 6 afin que celles-ci soient disponibles pour la suite du fonctionnement normal schématiquement représenté par l'étape E420 sur la figure 4. Lorsqu'il s'agit d'une commande *Read Record* définie par la norme ISO 7816, cette étape E420 consiste par exemple à émettre les données lues.

Dans le cas où un type de fichier erroné a été détecté à l'étape E406, on procède comme indiqué précédemment à l'étape E430 de mise à jour d'un statut d'erreur E pour que celui-ci indique une erreur provenant du type de fichier.

L'étape E430 est suivie de l'étape E450, à laquelle on procède à la lecture d'une zone-leurre en mémoire vive 4. La zone-leurre est par exemple une zone dédiée, sans autre utilisation, qui contient des données dédiées à cette utilisation et qui sont ici différentes par exemple des droits d'accès relatifs à l'autorisation de lecture en mémoire réinscriptible 6 mentionné à l'étape E408.

On procède ensuite à l'étape E452 à laquelle on compare la donnée lue à l'étape E450 (c'est-à-dire la donnée lue dans la zone-leurre que l'on peut donc dénommer "donnée-leurre") à la valeur 0.

On peut remarquer que les étapes E450 et E452 n'ont pas de rôle fonctionnel dans le procédé de fonctionnement de la carte, c'est-à-dire que les données qui y sont traitées ou le résultat de la comparaison effectuée n'ont aucune incidence sur les autres parties du procédé.

Toutefois, la réalisation de ces deux étapes ne se distingue pas, pour un observateur extérieur tel qu'un attaquant qui mesure les consommations de courant de la carte à microcircuit, des opérations réalisées lors de l'étape E408 de fonctionnement normal décrites précédemment. En effet, les opérations des étapes E408 et E410 qui consistaient à la lecture de données en mémoire vive et à leur comparaison ont une signature semblable aux opérations similaires de lecture en mémoire vive et de comparaison à la valeur 0 réalisées aux étapes E450 et E452.

Ainsi, à ce stade du procédé, il est impossible pour un attaquant de déterminer par des observations menées de l'extérieur qu'une anomalie a été détectée à l'étape E406.

L'étape E452 est suivie de l'étape E454 qui sera décrite plus loin.

Dans le même ordre d'idée de ce qui vient d'être présenté à propos de la détection d'un type de fichier erroné, on procède comme on l'a vu en cas d'interdiction d'accès en mémoire réinscriptible (étapes E408 et E410) à une étape E432, à laquelle on met à jour le statut d'erreur E pour indiquer que l'erreur provient d'une interdiction de lecture de la mémoire réinscriptible 6.

L'étape E432 est également suivie de l'étape E454 déjà mentionnée et qui va à présent être décrite.

A l'étape E454, le procédé réalise des actions de lecture dans une zone-leurre de la mémoire réinscriptible 6 et des actions d'écriture dans une zone-leurre de la mémoire vive 4.

Comme indiqué précédemment, les zones-leurres dans les mémoires 4, 6 sont des zones de ces mémoires dans lesquelles sont inscrites des données qui n'ont aucune fonction particulière lors du fonctionnement normal. Les accès en lecture ou en écriture à ces zones-leurres permettent toutefois de simuler, pour un observateur extérieur du déroulement du procédé, les étapes réalisées lors du fonctionnement normal par exemple à l'étape E412, sans conséquence sur les données utilisées ailleurs par le procédé ou sur la sécurité de celui-ci.

L'étape E454 est suivie d'une étape E456 de lecture de zones-leurres aussi bien dans la mémoire vive 4 que dans la mémoire réinscriptible 6. Comme indiqué précédemment, ces accès en lecture n'ont aucun rôle fonctionnel dans le fonctionnement normal du programme (c'est-à-dire que les données lues dans les zones-leurres ne sont pas utilisées dans d'autres parties du procédé). Toutefois, pour un attaquant qui essaie de connaître le fonctionnement interne du procédé au moyen d'observations (par exemple de la consommation électrique du microprocesseur ou des mémoires 4, 6), les étapes E454 et E456 génèrent des signatures qui sont semblables respectivement aux signatures générées par les étapes E412 et E414 lors du fonctionnement normal.

Ainsi, à ce stade du procédé, il est impossible à un attaquant, par l'observation externe du fonctionnement de la carte à microcircuit, de déterminer si le procédé réalise les étapes E412 et E414 du fonctionnement normal, ou les étapes E454 et E456 postérieures à la détection d'une anomalie de fonctionnement (que ce soit une anomalie due à un type de fichier erroné ou une sortie du fonctionnement normal par interdiction de l'accès à la mémoire réinscriptible 6).

De même que les étapes E450 et E452, les étapes E454 et E456 ne sont pas des étapes de traitement de l'anomalie détectée, puisque ces étapes travaillent sur des données-leurres, sans chercher à remédier à une erreur fonctionnelle, ni à mettre en oeuvre une contre-mesure pour le cas où l'anomalie provient d'une attaque par génération de faute.

L'étape E456 est suivie de l'étape E458 décrite plus bas.

Dans l'hypothèse évoquée plus haut où la vérification de l'exactitude des données lues à l'étape E412 par l'étape E414 est négative, l'étape E416 est suivie de l'étape E434 de mise à jour du statut d'erreur E afin que celui-ci indique que l'erreur détectée provient d'une erreur lors de la lecture dans la mémoire réinscriptible 6.

L'étape E434 est alors suivie de l'étape E458 déjà mentionnée et décrite à présent.

L'étape E458 consiste à émettre le statut d'erreur tel qu'il a été déterminé lors d'une étape précédente (c'est-à-dire lors de l'une des étapes E430, E432 et E434). Cette émission du code d'erreur peut être réalisée à destination d'un autre procédé (ou autre partie de procédé) mis en oeuvre dans la carte à microcircuit. Par exemple, si le procédé représenté à la figure 4 représente un sous-programme exécuté lorsque le programme principal de gestion du fonctionnement de la carte à microcircuit requiert une lecture dans la mémoire réinscriptible 6, l'étape E458 peut consister à retourner la valeur du statut d'erreur au programme principal.

En variante, l'émission du statut d'erreur à l'étape E458 peut être dirigée vers le terminal utilisateur via l'interface 8.

Le procédé représenté à la figure 4 comporte ainsi deux branches principales :
- une première branche qui correspond au déroulement normal du procédé (étapes E402 à E420) ;
- une seconde branche composée d'étapes dont une partie au moins est réalisée après qu'une anomalie a été détectée (étapes E450 à E458).

Comme on l'a vu, une grande partie des étapes de la première branche est simulée, en cas de détection d'anomalie, par une étape correspondante de la seconde branche. Pour ce faire, l'étape correspondante dans la seconde branche utilise une instruction du même type que l'étape correspondante dans la première branche, le cas échéant met en oeuvre une communication avec un dispositif identique à celui utilisé dans l'étape correspondante de la première branche, de manière à générer pour un attaquant la même signature, en termes de consommation électrique ou de rayonnement électromagnétique par exemple.

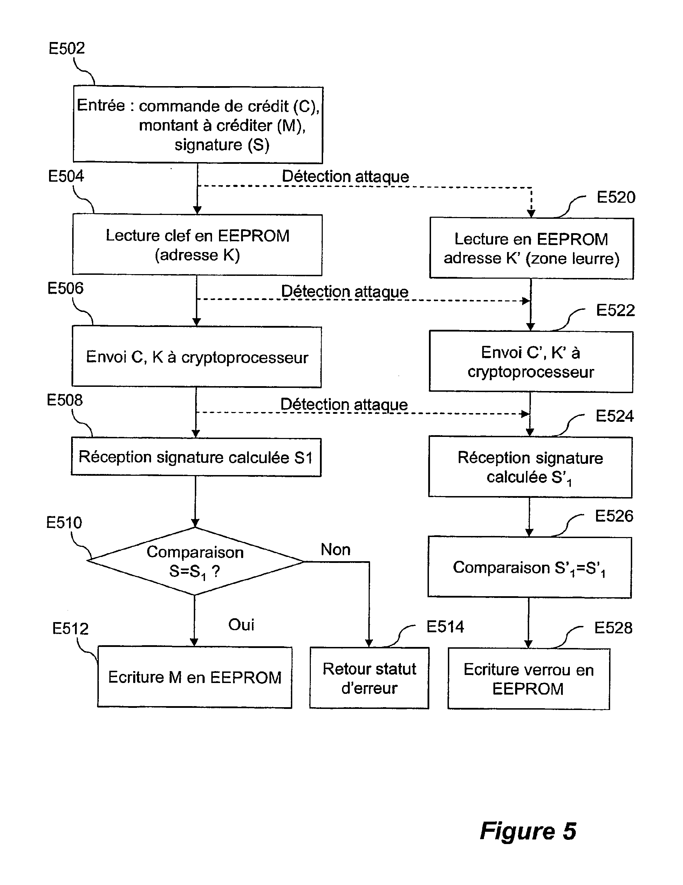

La figure 5 représente un procédé mis en oeuvre dans une carte à microcircuit du type porte-monnaie électronique (parfois dénommé par le mot anglais *purse*) selon les enseignements d'un troisième mode de réalisation de l'invention.

Ce procédé est par exemple mis en oeuvre par l'exécution d'un programme constitué d'instructions au sein du microprocesseur 2 de la carte à microcircuit.

La figure 5 représente les étapes principales du procédé mis en oeuvre pour créditer le porte-monnaie électronique, c'est-à-dire modifier la donnée stockée dans la carte à microcircuit qui représente la valeur du porte-monnaie électronique dans le sens d'une augmentation de cette valeur.

Ce procédé commence donc à l'étape E502, à laquelle le microprocesseur 2 de la carte à microcircuit 10 reçoit de l'utilisateur (via l'interface 8) un code de commande de crédit C, le montant à créditer M et une signature S, comme représenté à l'étape E502.

Comme on le verra dans la suite, la signature S permet de s'assurer que l'utilisateur dispose effectivement d'une autorisation pour effectuer ce crédit ; en effet, sans cette précaution, tout un chacun pourrait commander l'augmentation de la valeur du porte-monnaie électronique, ce qui n'est bien sûr pas acceptable.

On va à présent décrire les étapes mises en oeuvre lors du fonctionnement normal du procédé de crédit du porte-monnaie électronique.

A l'étape E504, qui suit l'étape E502 lors du fonctionnement normal, le microprocesseur commande la lecture dans la mémoire réinscriptible 6 d'une clé K en spécifiant l'adresse de stockage de cette clé dans la mémoire réinscriptible 6. La clé K stockée dans la mémoire réinscriptible 6 est secrète et n'est donc pas accessible de l'extérieur.

Le microprocesseur 2 procède alors à l'étape E506 d'envoi de la clé secrète K lue dans la mémoire réinscriptible 6 et du code de commande C à un cryptoprocesseur (non représenté sur la figure 1). Le cryptoprocesseur effectue un calcul cryptographique à partir des données reçues (clé secrète K, code de commande C) selon des algorithmes classiques en cryptographie, par exemple l'algorithme DES. Plus précisément, on applique ici un algorithme au code de commande C en utilisant la clé secrète K, afin d'obtenir une signature calculée S1.

Le cryptoprocesseur retourne alors au microprocesseur 2 la signature calculée S1 (étape E508).

Si l'utilisateur qui commande l'exécution du procédé est effectivement autorisé à réaliser le crédit, il a également connaissance de la clé secrète K et a pu par conséquent déterminer la signature S de manière identique au calcul qui vient d'être réalisé pour calculer la signature S1.

C'est pourquoi à l'étape E on compare la signature reçue de l'utilisateur S à la signature calculée S1 sur la base de la clé secrète K stockée dans la carte à microcircuit, ce qui permet de déterminer si l'écriture du crédit est autorisée.

Ainsi, si la comparaison entre S et S1 est positive à l'étape E510, on procède à l'étape E512 où l'on écrit le montant à créditer M, ou en variante la valeur du porte-monnaie électronique résultant de ce crédit, dans la mémoire réinscriptible 6.

Par contre, si on détermine à l'étape E510 que la signature S reçue de l'utilisateur ne correspond pas à la signature calculée S1, on ne peut autoriser le crédit du porte-monnaie électronique et on procède alors à l'étape E514 par laquelle le microprocesseur 2 émet vers le terminal utilisateur un statut d'erreur.

On vient de décrire les étapes principales d'un procédé de crédit d'un porte-monnaie électronique. Naturellement, pour assurer un fonctionnement sécurisé de ce procédé, ces étapes principales sont séparées par des étapes de vérification du déroulement normal du procédé, qui permettent par différents tests de détecter d'une part des erreurs fonctionnelles et d'autre part des attaques, par exemple par génération de faute.

En cas de détection d'une attaque, le microprocesseur 2 procède à des étapes différentes de celles du fonctionnement normal, comme décrit à présent. Selon une variante éventuellement compatible avec ce qui est décrit dans la suite, le procédé peut également mettre en oeuvre ces étapes différentes (ou d'autres étapes différentes du fonctionnement normal) si on détecte une erreur fonctionnelle (en lieu et place d'une attaque).

Comme représenté en pointillés sur la figure 5, si une attaque est détectée entre l'étape E502 de réception des données et l'étape E504 de lecture de la clé secrète K dans la mémoire réinscriptible 6, on procède à l'étape E520, à laquelle on lit dans la mémoire réinscriptible 6 des données à une adresse K' qui constitue une zone-leurre correspondant à la zone contenant la clé secrète K lue à l'étape E504 lors du fonctionnement normal.

Ainsi, si un attaquant génère une attaque par faute qui est détectée par le microprocesseur 2, on procède à l'étape E520 dont la signature électrique ou électromagnétique (telle qu'observée par l'attaquant) est semblable à celle de l'étape E504 réalisée en fonctionnement normal. L'attaquant pense ainsi que son attaque n'a pas été détectée et que le microprocesseur 2 lit effectivement dans la mémoire réinscriptible 6 la clé secrète K.

Après l'étape E520, on procède à l'étape E522. On procède également à cette étape E522 si une attaque est détectée par des étapes de vérification du déroulement normal du procédé situées entre les étapes E504 et E506 précédemment décrites.

L'étape E522 consiste à envoyer au cryptoprocesseur (précédemment mentionné en ce qui concerne les étapes E506 et E508) des données C' et K' qui constituent des données-leurres. Ainsi, l'étape E522 n'a pas de rôle fonctionnel particulier, mais simule la réalisation de l'étape E506 pour un attaquant qui observe le fonctionnement de la carte à microcircuit 10 par la simple étude des consommations électriques ou du rayonnement électromagnétique générés par cette carte.

Dans le cas où l'étape E522 a été précédée de l'étape E520, la donnée-leurre K' peut être la donnée lue lors de l'étape E520. En variante, il peut s'agir d'une donnée prédéterminée, et de préférence d'une donnée sans rapport avec le fonctionnement sécurisé de la carte à microcircuit 10.

Comme précédemment, la signature de l'étape E522 étant similaire à celle de l'étape E506 réalisée en fonctionnement normal, un attaquant ignore lorsque l'étape E522 est exécutée que son attaque a en fait été détectée.

L'étape E522 est suivie de l'étape E524 décrite plus bas.

Comme précédemment, les étapes E506 et E508 peuvent être séparées par des étapes de vérification du fonctionnement normal du procédé susceptibles de détecter une attaque, comme représenté en pointillés sur la figure 5. En cas de détection d'attaque, le procédé continue également à l'étape E524.

L'étape E524 consiste à recevoir une signature calculée par le cryptoprocesseur. Comme précédemment pour les étapes E520 et E522, l'étape E524 permet de simuler une étape du fonctionnement normal (ici l'étape E508) afin de rendre indétectable pour un attaquant le fait que son attaque précédente a été détectée.

Dans le cas où on a précédemment procédé à l'étape E522, la signature S1' est par exemple la signature calculée par le cryptoprocesseur sur la base des données C' et K' transmises lors de l'étape E522. Dans ce cas, la signature calculée S1' n'a pas de rôle fonctionnel puisqu'elle est basée sur des données-leurres.

Lorsque le procédé arrive à l'étape E524 suite à la détection d'une attaque entre les étapes E506 et E508, l'étape E524 peut par exemple consister à ne recevoir effectivement qu'une partie de la signature calculée par le cryptoprocesseur sur la base des données C et K émises à l'étape E506. Le reste de la signature S1' est par exemple forcé à une valeur prédéterminée, de telle sorte que le résultat obtenu (signature S1') ne correspond pas à la signature S1 afin de préserver la sécurité du fonctionnement de la carte à microcircuit.

L'étape E524 est suivie de l'étape E526 à laquelle on effectue par exemple une comparaison de la valeur S1' qui vient d'être déterminée avec elle-même. Comme précédemment, cette étape n'a aucun rôle fonctionnel (puisque le résultat de la comparaison d'un nombre avec lui-même est bien sûr connu d'avance), mais permet de simuler la réalisation de l'étape E510 pour un attaquant qui observe le comportement électrique et/ou électromagnétique de la carte à microcircuit 10. En effet, les étapes E526 et E510 mettant en oeuvre la même instruction, elles ont des signatures électriques (et électromagnétiques) très similaires.

Ainsi, si une attaque a été détectée entre les étapes E502 et E508 du fonctionnement normal, le fonctionnement normal a été interrompu (par le passage aux étapes-leurres E520 à E526) sans toutefois que ce changement ne soit détectable par un attaquant.

L'étape E526 est suivie de l'étape E528 à laquelle on écrit des données de blocage (ou verrou) dans la mémoire réinscriptible 6.

Comme déjà mentionné à propos du premier mode de réalisation décrit en référence à la figure 3, l'écriture de données de blocage dans la mémoire réinscriptible 6 empêche toute utilisation ultérieure de la carte à microcircuit 10. Il s'agit donc d'une contre-mesure particulièrement sévère et efficace en réponse à la détection d'une attaque.

On remarque en outre que l'étape E528 est réalisée à un moment où le fonctionnement normal aurait réalisé l'étape E512 d'écriture du montant en mémoire réinscriptible 6. Ainsi, au premier abord, l'étape E528 est confondue par l'attaquant avec l'étape E512 du fonctionnement normal qui possède la même signature électrique et/ou électromagnétique, notamment parce que les étapes E512 et E528 correspondent à des instructions du même type qui réalisent toutes deux une communication du microprocesseur 2 à la mémoire réinscriptible 6.

Comme bien visible sur la figure 5, l'étape E512 et les étapes précédentes du fonctionnement normal ont chacune une étape de signature semblable mise en oeuvre en cas de détection d'une attaque. Notamment, l'étape E512 d'écriture du montant dans la mémoire réinscriptible 6, qui constitue une étape importante dans la mise en oeuvre du procédé, est associée à l'étape E528 d'écriture des données de blocage, qui constitue précisément la contre-mesure en cas de détection d'une attaque à l'encontre de ce procédé.

Ainsi, non seulement un attaquant ne peut pas déterminer la détection de son attaque à cause des étapes E520 à E526 simulant un fonctionnement normal, mais la contre-mesure (ici l'écriture des données de blocage) est en outre réalisée avec une chronologie telle qu'elle est confondue avec une étape du fonctionnement normal ayant une signature électrique et/ou électromagnétique semblable.

Les exemples qui viennent d'être décrits ne sont que des modes possibles de mise en oeuvre de l'invention.

## Revendications

1. Procédé de sécurisation dans un dispositif mettant en oeuvre un procédé de traitement de données comprenant :
- une étape de vérification d'un critère indicatif du déroulement normal du procédé de traitement de données ; et
- une étape de traitement (E528) effectuée en cas de vérification négative,
dans lequel une première action (E512) d'écriture de données dans une mémoire physique (6) est réalisée en cas de vérification positive, en ce que l'étape de traitement (E320 ; E528) comporte une seconde action d'écriture de données dans la mémoire physique (6) et en ce que l'écriture (E528) de données de la seconde action a lieu au moment où serait réalisée l'écriture (E512) de données de la première action en cas de déroulement normal du procédé, **caractérisé en ce que** ladite seconde action d'écriture de données comportant au moins l'un parmi ;
- une écriture de données de blocage empêchant une utilisation ultérieure dudit dispositif, et
- une écriture de données représentatives d'une anomalie détectée en cas de vérification négative, lesdites données représentatives d'une anomalie détectée permettant une analyse d'un problème rencontré par ledit dispositif.

2. Procédé selon la revendication 1, comportant en outre une étape de blocage dudit dispositif empêchant une utilisation ultérieure, suite à ladite analyse.

3. Procédé selon l'une des revendications précédentes, dans lequel ladite écriture de données représentatives d'une anomalie détectée comporte la mise à jour d'un drapeau.

4. Procédé selon l'une des revendications précédentes, dans lequel ladite sécurisation vise à protéger ledit dispositif contre des attaques.

5. Procédé selon l'une des revendications précédentes, dans lequel ladite première action d'écriture concerne des premières données propres au déroulement normal dudit procédé et ladite deuxième action d'écriture concerne des deuxièmes données propres au déroulement anormal du procédé.

6. Procédé selon la revendication 5, dans lequel ladite première action d'écriture comporte la mise à jour d'une première donnée propre au déroulement normal dudit procédé et ladite deuxième action d'écriture concerne la mise à jour d'une deuxième donnée propre au déroulement anormal du procédé.

7. Procédé selon l'une des revendications 1 à 6, dans lequel la seconde action est différente de la première action.

8. Procédé selon l'une des revendications 1 à 7, dans lequel, une troisième action (E418 ; E512) étant réalisée en cas de vérification positive, l'étape de traitement comprend la réalisation d'au moins une quatrième action (E458 ; E528).

9. Procédé selon la revendication 8, dans lequel la troisième action met en oeuvre une instruction du même type que la quatrième action.

10. Procédé selon la revendication 8, dans lequel la troisième action comprenant un accès à une première zone d'une mémoire, la quatrième action comprend un accès à une seconde zone de ladite mémoire différente de la première zone.

11. Procédé selon la revendication 10, dans lequel ladite première zone contient une clé secrète.

12. Procédé selon la revendication 8, dans lequel la quatrième action met en oeuvre une communication avec un dispositif externe identique à celui utilisé dans la troisième action.

13. Procédé selon la revendication 12, dans lequel le dispositif externe est un cryptoprocesseur.

14. Procédé selon la revendication 12, dans lequel le dispositif externe est une mémoire (2, 6).

15. Procédé selon la revendication 12, dans lequel le dispositif externe est une mémoire réinscriptible à semi-conducteur (6).

16. Procédé selon la revendication 12, dans lequel le dispositif externe est un terminal d'utilisateur.

17. Procédé selon l'une des revendications 1 à 16, dans lequel la première action comporte une étape sécurisée.

18. Procédé selon la revendication 17, dans lequel l'étape sécurisée comporte un algorithme cryptographique.

19. Procédé selon l'une des revendications 1 à 18, dans lequel les données représentent une valeur pécuniaire.

20. Procédé selon l'une des revendications 1 à 19, dans lequel le critère est négatif si une signature erronée est fournie.

21. Procédé selon l'une des revendications 1 à 20, dans lequel le critère est négatif si une anomalie est détectée.

22. Procédé selon l'une des revendications 1 à 21, dans lequel le critère est négatif si une attaque est détectée.

23. Procédé selon l'une des revendications 1 à 22, dans lequel le critère est négatif si une erreur fonctionnelle est détectée.

24. Procédé selon l'une des revendications 1 à 23, mis en oeuvre par un microprocesseur (2) d'une carte à microcircuit (10).

25. Dispositif de traitement de données comprenant :
- des moyens de vérification d'un critère indicatif du fonctionnement normal du dispositif; et
- des moyens de traitement mis en oeuvre en cas de vérification négative,
dans lequel des premiers moyens d'action d'écriture de données dans une mémoire physique sont mis en oeuvre en cas de vérification positive, et en ce que les moyens de traitement sont aptes à écrire des données dans la mémoire physique au moment où serait réalisée l'écriture de données dans la mémoire physique par les premiers moyens d'action en cas de déroulement normal du procédé, **caractérisé en ce que** les moyens de traitement sont aptes à écrire des données parmi :
- des données de blocage empêchant une utilisation ultérieure dudit dispositif, et
- des données représentatives d'une anomalie détectée en cas de vérification négative, lesdites données représentatives d'une anomalie détectée permettant une analyse d'un problème rencontré par ledit dispositif.

26. Dispositif selon la revendication 25, le dispositif étant une carte à microcircuit.

## Patentansprüche

1. Verfahren zur Sicherung in einer Vorrichtung, das ein Datenverarbeitungsverfahren einsetzt, das Folgendes umfasst:
- einen Schritt des Überprüfens eines Kriteriums, das den normalen Ablauf des Datenverarbeitungsverfahrens anzeigt; und
- einen Verarbeitungsschritt (E528), der im Falle einer negativen Überprüfung durchgeführt wird,
wobei im Falle einer positiven Überprüfung ein erster Vorgang (E512) zum Schreiben von Daten in einen physikalischen Speicher (6) ausgeführt wird, dadurch, dass der Verarbeitungsschritt (E320; E528) einen zweiten Vorgang zum Schreiben von Daten in den physikalischen Speicher (6) umfasst, und dadurch, dass das Schreiben (E528) von Daten des zweiten Vorgangs an dem Zeitpunkt stattfindet, an dem das Schreiben (E512) von Daten des ersten Vorgangs im Falle des normalen Ablaufs des Verfahrens ausgeführt würde, **dadurch gekennzeichnet, dass** der zweite Vorgang zum Schreiben von Daten mindestens eines von Folgendem umfasst:
- ein Schreiben von Sperrdaten, die eine weitere Verwendung der Vorrichtung verhindern, und
- ein Schreiben von Daten, die für eine im Falle einer negativen Überprüfung ermittelte Anomalie charakteristisch sind, wobei die Daten, die für eine ermittelte Anomalie charakteristisch sind, eine Analyse eines durch die Vorrichtung angetroffenen Problems ermöglichen.

2. Verfahren nach Anspruch 1, das überdies einen Schritt des Sperrens der Vorrichtung nach der Analyse umfasst, der eine weitere Verwendung verhindert.

3. Verfahren nach einem der vorhergehenden Ansprüche, wobei das Schreiben von Daten, die für eine ermittelte Anomalie charakteristisch sind, die Aktualisierung eines Kennzeichens umfasst.

4. Verfahren nach einem der vorhergehenden Ansprüche, wobei die Sicherung darauf abzielt, die Vorrichtung vor Angriffen zu schützen.

5. Verfahren nach einem der vorhergehenden Ansprüche, wobei der erste Schreibvorgang erste Daten betrifft, die für den normalen Ablauf des Verfahrens charakteristisch sind, und der zweite Schreibvorgang zweite Daten betrifft, die für den abnormalen Ablauf des Verfahrens charakteristisch sind.

6. Verfahren nach Anspruch 5, wobei der erste Schreibvorgang die Aktualisierung eines ersten Datenelements umfasst, das für den normalen Ablauf des Verfahrens charakteristisch ist, und der zweite Schreibvorgang die Aktualisierung eines zweiten Datenelements betrifft, das für den abnormalen Ablauf des Verfahrens charakteristisch ist.

7. Verfahren nach einem der Ansprüche 1 bis 6, wobei der zweite Vorgang sich vom ersten Vorgang unterscheidet.

8. Verfahren nach einem der Ansprüche 1 bis 7, wobei ein dritter Vorgang (E418; E512) im Falle einer positiven Überprüfung ausgeführt wird, wobei der Verarbeitungsschritt die Ausführung von mindestens einem vierten Vorgang (E458; E528) umfasst.

9. Verfahren nach Anspruch 8, wobei der dritte Vorgang einen Befehl desselben Typs einsetzt wie der vierte Vorgang.

10. Verfahren nach Anspruch 8, wobei der dritte Vorgang einen Zugriff auf einen ersten Bereich eines Speichers umfasst, wobei der vierte Vorgang einen Zugriff auf einen zweiten Bereich des Speichers umfasst, der sich vom ersten Bereich unterscheidet.

11. Verfahren nach Anspruch 10, wobei der erste Bereich einen geheimen Schlüssel enthält.

12. Verfahren nach Anspruch 8, wobei der vierte Vorgang eine Kommunikation mit einer externen Vorrichtung einsetzt, die identisch mit derjenigen ist, die im dritten Vorgang verwendet wird.

13. Verfahren nach Anspruch 12, wobei die externe Vorrichtung ein Kryptoprozessor ist.

14. Verfahren nach Anspruch 12, wobei die externe Vorrichtung ein Speicher (2, 6) ist.

15. Verfahren nach Anspruch 12, wobei die externe Vorrichtung ein wiederbeschreibbarer Halbleiterspeicher (6) ist.

16. Verfahren nach Anspruch 12, wobei die externe Vorrichtung ein Benutzerendgerät ist.

17. Verfahren nach einem der Ansprüche 1 bis 16, wobei der erste Vorgang einen gesicherten Schritt umfasst.

18. Verfahren nach Anspruch 17, wobei der gesicherte Schritt einen kryptographischen Algorithmus umfasst.

19. Verfahren nach einem der Ansprüche 1 bis 18, wobei die Daten einen Geldwert darstellen.

20. Verfahren nach einem der Ansprüche 1 bis 19, wobei das Kriterium negativ ist, wenn eine falsche Signatur geliefert wird.

21. Verfahren nach einem der Ansprüche 1 bis 20, wobei das Kriterium negativ ist, wenn eine Anomalie ermittelt wird.

22. Verfahren nach einem der Ansprüche 1 bis 21, wobei das Kriterium negativ ist, wenn ein Angriff ermittelt wird.

23. Verfahren nach einem der Ansprüche 1 bis 22, wobei das Kriterium negativ ist, wenn ein Funktionsfehler ermittelt wird.

24. Verfahren nach einem der vorhergehenden Ansprüche 1 bis 23, das durch einen Mikroprozessor (2) einer Mikroschaltungskarte (10) eingesetzt wird.

25. Datenverarbeitungsvornchtung, die Folgendes umfasst:
- Mittel zur Überprüfung eines Kriteriums, das die normale Funktion der Vorrichtung anzeigt; und
- Verarbeitungsmittel, die im Falle einer negativen Überprüfung eingesetzt werden,
wobei erste Mittel für einen Vorgang zum Schreiben von Daten in einen physikalischen Speicher im Falle einer positiven Überprüfung eingesetzt werden, und dadurch, dass die Verarbeitungsmittel geeignet sind, Daten an dem Zeitpunkt in den physikalischen Speicher zu schreiben, an dem das Schreiben von Daten in den physikalischen Speicher durch die ersten Vorgangsmittel im Falle des normalen Ablaufs des Verfahrens ausgeführt würde, **dadurch gekennzeichnet, dass** die Verarbeitungsmittel geeignet sind, folgende Daten zu schreiben:
- Sperrdaten, die eine weitere Verwendung der Vorrichtung verhindern, und
- Daten, die für eine ermittelte Anomalie im Falle einer negativen Überprüfung charakteristisch sind, wobei die Daten, die für eine ermittelte Anomalie charakteristisch sind, eine Analyse eines durch die Vorrichtung angetroffenen Problems ermöglichen.

26. Vorrichtung nach Anspruch 25, wobei die Vorrichtung eine Mikroschaltungskarte ist.

## Claims

1. Security method in a device implementing a data processing method comprising:
- a step of verification of a criterion indicative of the normal running of the data processing method; and
- a step of processing (E528) effected in the case of negative verification,
wherein a first action (E512) of writing data to a physical memory (6) is performed in the case of positive verification, in that the processing step (E320; E528) includes a second action of writing data to the physical memory (6) and in that the writing (E528) of data of the second action takes place at the moment when the writing (E512) of data of the first action would be performed in the case of normal running of the method, **characterised in that** said second action of writing data including at least one of:
- a writing of blocking data preventing subsequent use of said device, and
- a writing of data representative of a detected anomaly in the case of negative verification, said data representative of a detected anomaly enabling an analysis of a problem encountered by said device.

2. Method according to claim 1, furthermore including a step of blocking said device preventing subsequent use, following said analysis.

3. Method according to one of the preceding claims, wherein said writing of data representative of a detected anomaly includes the updating of a flag.

4. Method according to one of the preceding claims, for protecting said device against attacks.

5. Method according to one of the preceding claims, wherein said first action of writing relates to first data specific to the normal running of said method and said second action of writing relates to second data specific to the abnormal running of the method.

6. Method according to claim 5, wherein said first action of writing includes the updating of a first datum specific to the normal running of said method and said second action of writing relates to the updating of a second datum specific to the abnormal running of the method.

7. Method according to one of claims 1 to 6, wherein the second action is different from the first action.

8. Method according to one of claims 1 to 7, wherein, a third action (E418; E512) being performed in the case of positive verification, the processing step comprises the performing of at least one fourth action (E458; E528).

9. Method according to claim 8, wherein the third action implements an instruction of the same type as the fourth action.

10. Method according to claim 8, wherein the third action comprising an access to a first zone of a memory, the fourth action comprises an access to a second zone of said memory different from the first zone.

11. Method according to claim 10, wherein said first zone contains a secret key.

12. Method according to claim 8, wherein the fourth action implements a communication with an external device identical to that used in the third action.

13. Method according to claim 12, wherein the external device is a cryptoprocessor.

14. Method according to claim 12, wherein the external device is a memory (2, 6).

15. Method according to claim 12, wherein the external device is a rewritable semiconductor memory (6).

16. Method according to claim 12, wherein the external device is a user terminal.

17. Method according to one of claims 1 to 16, wherein the first action entails a secure step.

18. Method according to claim 17, wherein the secure step entails a cryptographic algorithm.

19. Method according to one of claims 1 to 18, wherein the data represents a pecuniary value.

20. Method according to one of claims 1 to 19, wherein the criterion is negative if an erroneous signature is provided.

21. Method according to one of claims 1 to 20, wherein the criterion is negative if an anomaly is detected.

22. Method according to one of claims 1 to 21, wherein the criterion is negative if an attack is detected.

23. Method according to one of claims 1 to 22, wherein the criterion is negative if a functional error is detected.

24. Method according to one of claims 1 to 23, implemented by a microprocessor (2) of a microcircuit card (10).

25. Data processing device comprising:
- means for verification of a criterion indicative of the normal operation of the device;
- processing means implemented in the case of negative verification,
wherein first action means for writing data to a physical memory are implemented in the case of positive verification, and in that the processing means are capable of writing data to the physical memory at the moment when the writing of data to the physical memory would be performed by the first action means in the case of normal running of the method, **characterised in that** the processing means are capable of writing data from among:
- blocking data preventing subsequent use of said device, and
- data representative of a detected anomaly in the case of negative verification, said data representative of a detected anomaly enabling an analysis of a problem encountered by said device.

26. Device according to claim 25, the device being a microcircuit card.
